# EUROPEAN PATENT SPECIFICATION

(11) **EP 3 333 032 B1**
(45) Date of publication and mention of the grant of the patent: **31.03.2021**
(21) Application number: 16202562.1
(22) Date of filing: 07.12.2016
(51) Int. Cl.: B60T 17/22, G01F 1/37, B60T 17/02

(54) **A SYSTEM AND A METHOD FOR SUPPLYING AIR FOR A COMMERCIAL VEHICLE**
SYSTEM UND VERFAHREN ZUR ZUFUHR VON LUFT FÜR EIN NUTZFAHRZEUG
SYSTÈME ET PROCÉDÉ D'ALIMENTATION EN AIR POUR UN VÉHICULE UTILITAIRE

(43) Date of publication of application: 13.06.2018
(73) Proprietor: KNORR-BREMSE Systeme für Nutzfahrzeuge GmbH, 80809 München (DE)
(72) Inventor: NEMETH, Huba, 1116 Budapest (HU)

(56) References cited:
- US-A- 5 621 657
- US-A- 5 963 883
- US-A1- 2003 066 360

## Description

The present invention relates to a system and a method for supplying air for a commercial vehicle and, in particular, to an airflow rate sensing for compressed air supply systems.

Commercial vehicles with compressed air brakes comprise typically compressed air systems that are composed of several components such as an air compressor, an air processing unit and several air tanks for storing the compressed air. The air processing units (A-APU) in commercial vehicles are nowadays controlled by electronic control systems and provide, inter alia, pressure control, air drying control and circuit protection functionalities.

Different pressure sensors are used to control and monitor the pressure levels in the multiple circuits of the compressed air system. The drying function of air is usually implemented by a drying process based on an adsorbent, wherein the drying and subsequent regeneration phases are to be controlled. In case of an electronic air processing unit the drying function takes into account also the air amount by which the dryer bed is loaded during the discharge phase. In the subsequent regeneration phase the needed air amount is determined as a function of the discharged air. This ensures an improved robustness when compared to mechanical air processing systems.

The amount of discharge air may, in principle, be calculated indirectly using a compressor delivery map based on a measurable engine speed and back pressure. Such implementation is, for example, disclosed in DE 10 2012 105 136 A1.

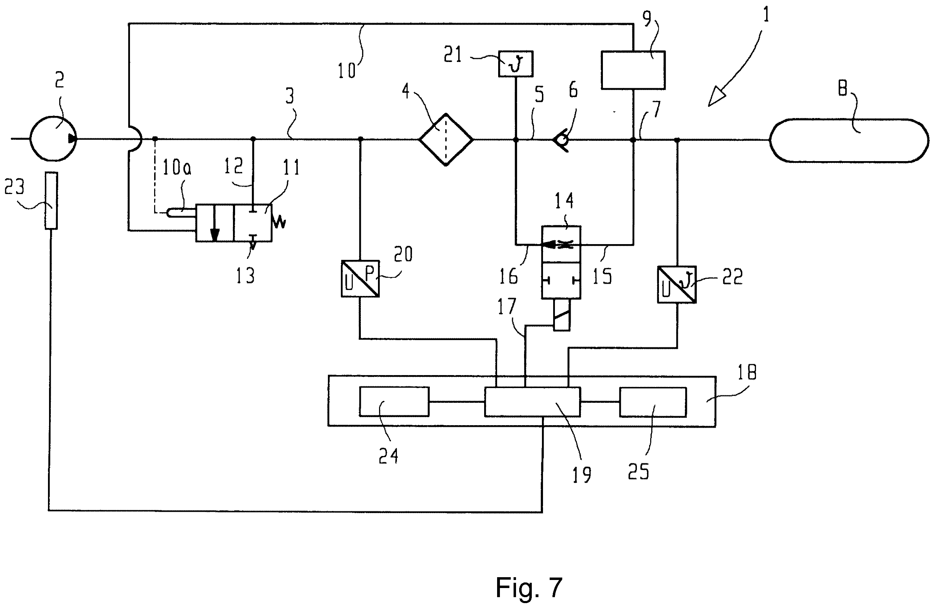

**Fig. 7** depicts such a system. It comprises a compressor 2, an air dryer 4 and a storage 8 of compressed air which are connected by air paths 3, 5 to supply compressed air from the compressor 2 to the storage 8. Between the air dryer 4 and the storage 8 a check valve 6 is arranged to allow an air flow from the air dryer 4 to the storage 8 and to block a reversed air flow. Thus, the pressure in the storage 8 can be kept even if the compressor does not operate. The system further comprises a control unit 18 which includes a memory 24, a processor 19 and a counter 25 for counting the degree of saturation of the air dryer 4. The control unit 18 receives sensor signals from a speed sensor 23 measuring the rotational speed of the compressor 2, from a pressure sensor 20 measuring the pressure on the line 3 between the compressor 2 and the air dryer 4, and from a temperature sensor 22 measuring the temperature of the air between the air dryer 4 and the storage 8. Based on these sensor signals the control unit 18 can continuously determine the amount of compressed air. The counter 25 enables to determine the moment when a predetermined threshold value is exceeded so that a regeneration cycle can be started.

During the regeneration cycle a bypass line 15, 16 from the storage 8 back to the air dryer 4 is opened by controlling at valve 14, thereby providing compressed air from the storage 8 to the air dryer 4. During the regeneration, the compressed air from the storage 8 is fed through the air dryer 4 and to an exhaust valve 11 which is likewise opened during the regeneration cycle to exhaust the air after passing the air dryer 4. The exhaust valve 11 controlled by a pressure controller 9 via a line 10 and a control input 10a is closed during the normal compressor operation, but it is open during the regeneration cycle. To further control the amount of air during the regeneration cycle a temperature sensor 21 is arranged to measure the temperature of air coming from the storage 8 to the air dryer 4.

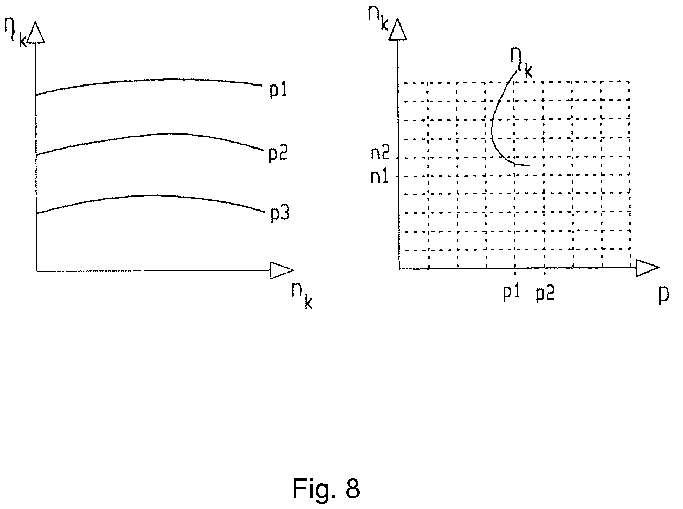

**Fig. 8** illustrates a possible controlling of the amount of air η depending on the rotational speed nₖ of the compressor 2. As is apparent from the left hand side, the amount of air η depends on the pressure p of the air and also on the rotational speed nₖ of the compressor 2. On the right-hand side, Fig. 8 depicts a possible controlling by using a matrix or table, wherein the rows relate to particular rotational speeds nₖ of the compressor 2 and the columns relate to particular pressure values p inside the air flows. If, for example, the speed sensor 23 detects that the rotational speed is in a particular range between n1 and n2 and the pressure sensor 20 senses a pressure value p being between two pressure values p1 and p2, the control unit 18 can pick the respective matrix element ηₖ indicating the amount of air flowing through the air dryer 4. Therefore, this matrix defines a table to look up the amount of air ηₖ provided by the air supply system. As a result, the electronic control unit 18 as used in the system of Fig. 7 can estimate the flow rate of the compressor 2.

However, the results obtainable by the system depicted in Fig. 7 take into account many sensors and thus depend on various factors that are difficult to control. This makes the system prone to inaccuracies and less reliable.

Therefore, there is a demand for a system which is able to provide a reliable compressor flow rate measurement which could be used for controlling or monitoring the air supply system of commercial vehicles.

At least some of the problems of the conventional device as described before are overcome by a system of claim 1 or of claim 5 or a method according to claim 14. The dependent claims refer to further advantageous realizations of the subject matter of the independent claims.

The present invention relates to a system for supplying air for a (commercial) vehicle, wherein the vehicle comprises an air compressor. The system comprises a flow rate sensor configured to provide a sensor signal indicative of a flow rate of air supplied by the compressor, and an air processing unit configured to process compressed air provided by the air compressor. Optionally, the compressor may be part of the system itself.

The sensor signal may or may not represent the flow rate along the flow path directly. It will be appreciated that the signal may represent any kind of physical quantity that is suitable to derive therefrom the desired flow rate (e.g. a pressure drop, a degree of cooling, a speed of floating particles or of a fan or other quantities). The flow rate sensor may thus measure (or sense) directly or indirectly the flow rate itself or any other physical variable that allows to determine the flow rate. The sensor signal may be provided for a control unit to control the compressor and/or the air processing unit and/or another component of the commercial vehicle.

Optionally, the flow rate sensor is arranged upstream or downstream of the air compressor (e.g. in respect to the compressed airflow provided by the compressor). It is understood that a flow rate measured upstream from the compressor is indicative of the flow rate of the compressed air downstream of the compressor and vice versa. Optionally, the flow rate sensor may be integrated in the air processing unit to sense the flow rate fed into the air processing unit or leaving it. Optionally, the air processing unit includes an air drying unit that is configured to dry the compressed air supplied by the compressor.

The present invention relates further to a system for compressing air (i.e. an air compressor) for a commercial vehicle with a compressed air braking system. This compressor comprises an input port connectable to an intake line, an output port connectable to a discharge line, a compressor unit arranged between the input port and the output port, and a flow rate sensor integrated in the input port or in the output port. The flow rate sensor is again configured to provide a sensor signal indicative of a flow rate of air supplied (or processed) by the compressor unit. This system may further comprise an air processing unit as described before.

Optionally, the defined systems further comprise an electronic control unit configured to receive the sensor signal and to determine the flow rate of air. The electronic control unit may be configured to control the air processing unit and/or to monitor the compressor operation based on the determined flow rate. The control unit may be the vehicle control unit or the air processing control unit.

In the present invention, the flow rate sensor is configured to sense the flow rate based on at least one of the following principles: a hot film measurement principle, a hot wire measurement principle, a floating body measurement principle, a Coriolis measurement principle, a rotary measurement principle, a reciprocating measurement principle, a vortex measurement principle, an ultrasonic measurement principle, a laser Doppler measurement principle or others.

Optionally, the flow rate sensor comprises a measurement orifice. The flow rate sensor may further comprise a pressure sensor configured to provide a sensor signal indicative of a pressure change of air when passing the orifice. For example, the pressure sensor may be configured to sense a pressure difference between an air upstream pressure and a downstream pressure of the orifice and to derive a pressure drop/jump on the measurement orifice, which is a variable indicative of the flow rate. According an embodiment, a discharge line of the compressor includes the measurement orifice sandwiched by a first port and a second port. The pressure drop generated across the orifice is measured through the first port and the second port by an exemplary differential pressure sensor. The sensor signal of the differential pressure sensor is fed back by a signal line to the control unit coupled to the air processing unit.

The present invention relates further to a vehicle, e.g. a commercial vehicle, with a compressor and one of the above-defined systems.

The present invention relates further to a method for supplying air for an air braking system in a commercial vehicle. The method comprises the steps of providing a sensor signal indicative of a flow rate of air supplied by the compressor, and, based on the sensors signal, processing compressed air provided by the air compressor.

Some examples of the systems and/or methods will be described in the following by way of examples only, and with respect to the accompanying figures, in which:
- Fig. 1: depicts a system for supplying air for a commercial vehicle according to an embodiment of the present invention;
- Fig. 2: depicts a schematic of a compressed air supply system with an air flow rate sensor in the discharge line according to a further embodiment;
- Fig. 3: depicts a schematic of a compressed air supply system with a flow rate sensor based on an orifice in the discharge line;
- Fig. 4: depicts a further schematic of a compressed air supply system with an air flow rate sensor in the intake line according to a further embodiment;
- Fig. 5: depicts a schematic of a compressed air supply system with an orifice-based airflow rate sensor in the intake line according to yet another embodiment;
- Fig. 6: depicts a flow chart of a method for supplying air according to an embodiment;
- Fig. 7: depicts a conventional electronically controlled air processing unit for commercial vehicles; and
- Fig. 8: depicts a calculation map for a compressor air flow rate used in the conventional air processing unit of Fig. 7.

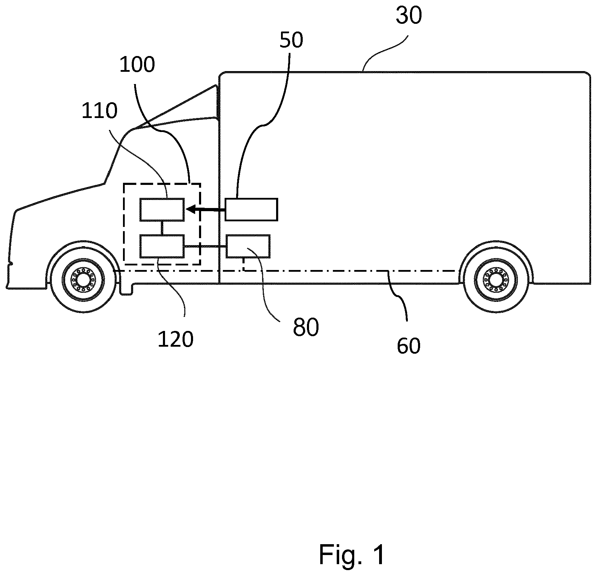

**Fig. 1** depicts a system for supplying air for a commercial vehicle 30 with an air compressor 50. The system 100 comprises a flow rate sensor 110 configured to provide a sensor signal indicative of a flow rate of air supplied by the compressor 50. The system 100 further comprises an air processing unit 120 configured to process compressed air provided by the air compressor 50. The compressed air is stored in a storage 80 for operating a compressed air braking system of the vehicle 30 using corresponding lines 60. The compressor 50 may or may not be part of the system 100.

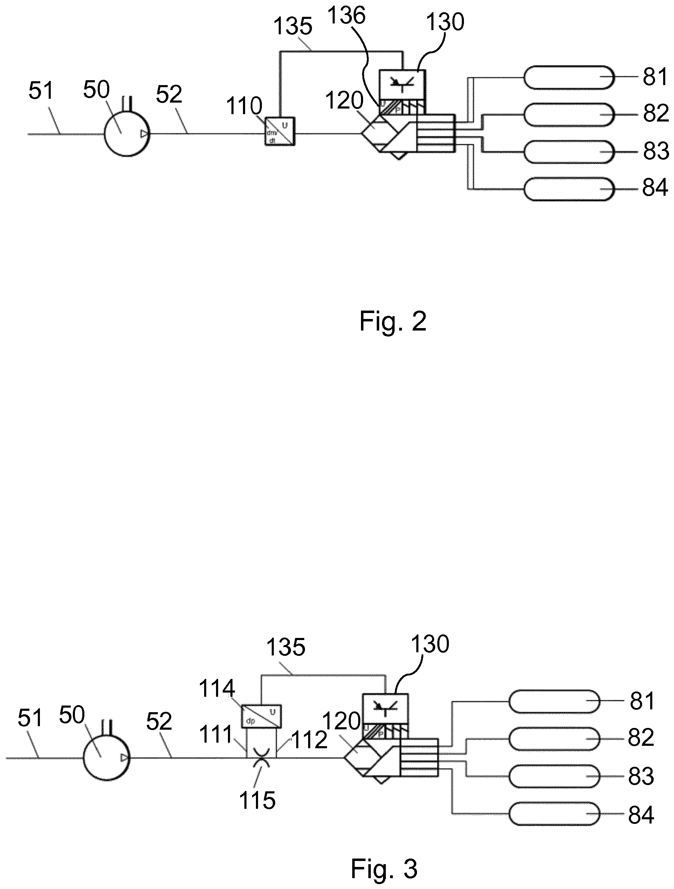

**Fig. 2** depicts an embodiment of the system 100 with further details, wherein the compressor 50 has an intake line 51 for receiving air and a discharge line 52 for providing compressed air to the air processing unit 120. The flow rate sensor 110 is arranged between the air processing unit 120 and the compressor 50 to measure a flow rate through the discharge line 52. In the embodiment of Fig. 2 the air processing unit 120 provides the processed air to four air storages 80: a first air storage 81, a second air storage 82, a third air storage 83, and a fourth air storage 84 which are, for example, configured to provide compressed air for different brakes and/or for a possible trailer. The air processing unit 120 includes further a control unit 130 which couples to an optional pressure voltage converter 136 which is configured to measure the air pressure in the air processing unit 120 and to provide a respective sensor signal (e.g. as a voltage signal) to the control unit 130. The control unit 130 is connected with the flow rate sensor 110 by a signal line 135 to receive also the sensor signal provided by the flow rate sensor 110, to determine the flow rate and to perform, based thereon, a control of the air processing unit 120.

Therefore, in the embodiment depicted in Fig. 2 the compressor gets the ambient air through the intake line 51 and its output is connected to the air processing unit 110 by the discharge line 52. The flow rate sensor 110 installed in the discharge line 52 provides the feedback signal to the air processing unit 120 by the signal line 135.

The medium in the compressor discharge line 52 is affected by water condensates, oil, dirt and/or dust or even frozen water or oil. Consequently, the air flow rate sensor 110 is advantageously robust enough against these influences. Such a flow rate sensor 110 relies, for example, on a measurement orifice as one example of a robust sensing method. In this case, flow rate sensor 110 measures a pressure drop (or jump) that is proportional to the airflow rate when passing the measurement orifice. This pressure drop may, for example, be measured by different pressure sensors.

**Fig. 3** depicts a corresponding embodiment, where the flow rate sensor 110 comprises such an orifice 115 arranged between a first port 111 and a second port 112. In addition, the flow rate sensor 110 comprises a pressure sensor 114 which is configured to detect a pressure difference between the first port 111 and the second port 112 and to generate, based thereon, a sensor signal which again may be fed via the signal line 135 to the control unit 130. All other components can be the same as in the embodiment of Fig. 2, so that a repeated description is omitted here.

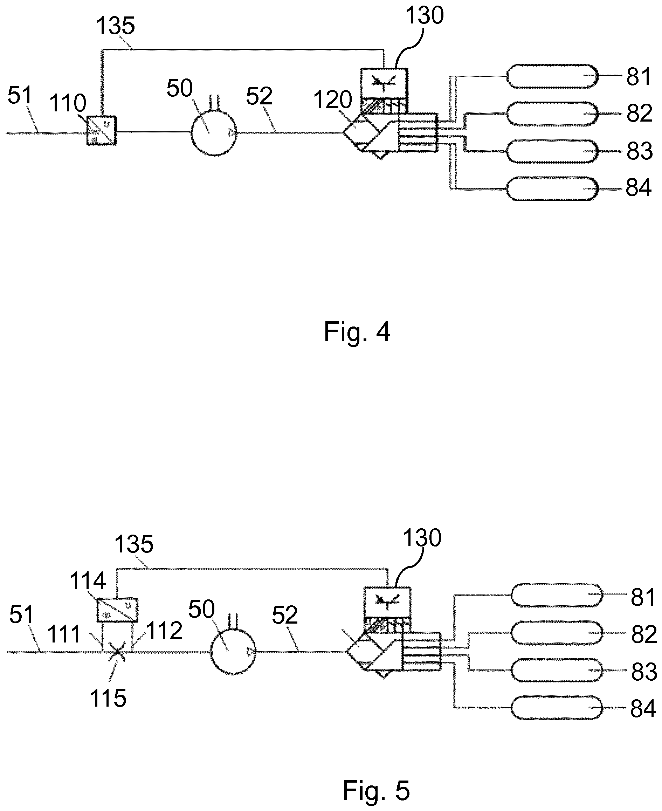

**Fig. 4** depicts another embodiment of the system 100 for supplying air, where the compressor 50 is arranged between the flow rate sensor 110 and the air processing unit 120. Therefore, the flow rate sensor 110 measures the flow rate at the intake line 51 of the compressor 50 and provides again the sensor signal via the signal line 135 to a control unit 130 which may again be part of the air processing unit 120 (as in the embodiment of Fig. 2). It is understood that the flow rate at the intake line 51 and the discharge line 52 are in a direct relationship depending on the compression rate of the compressor 50 (assuming that a loss of air in the compressor 50 is negligible). Hence, the control unit 130 can determine both the flow rate in the intake line 51 and in the discharge line 52.

**Fig. 5** depicts another embodiment, where the flow rate sensor 110 is again implemented by an orifice 115 with a first port 111 and a second port 112 to measure a pressure difference on both sides of the orifice 115. Therefore, the embodiment of Fig. 5 comprises the same or a similar flow rate sensor 110 as the embodiment of Fig. 3. However, instead of measuring the pressure difference at the discharge line 52 (as in Fig. 3), the embodiment of Fig. 5 measures a pressure difference in the intake line 51 when passing the orifice 115. The signal processing is performed in the same way as described in Fig. 3.

Therefore, there are various possibilities to connect or couple the flow rate sensor 110 to the compressor 50 (see Figs. 2 to 5). According to further embodiments, the flow rate sensor 110 may also be integrated in the air processing unit or in the compressor 50.

The flow rate sensor 110 can, in principle, measure the flow rate based on any known principle.

For example, the flow rate sensor 110 may be based on a hot film measurement principle. In this case, a cooling effect, which depends on the flow rate of air flowing along a hot film, can be measured (for example, by a change in its resistance). Such a hot film may be arranged as a semiconductor layer, which is exposed to the flow of compressed air. In another embodiment, the flow rate is measured based on the hot wire measurement principle. In this case - like in the hot film measurement principle - the flow rate is measured by measuring a cooling effect of a wire which is heated, for example, by using electricity and the temperature can be detected as a change in the resistance of this hot wire.

Another principle, on which the flow rate sensor 110 can be based, is the floating body measurement principle. In this case a body is floating in the flow of air and the flow rate can be measured by detecting a deviation or deflection of the floating body in the stream of air. The flow rate sensor 110 may also be based on a Coriolis measurement principle, according to which a Coriolis force that depends on a radial speed of a rotating medium is used to determine the speed of the flowing air. For example, the flowing air can be brought into a rotational movement while changing their radial position (like a vortex) so that an angular displacement of the radially inward or outward moving air indicates the speed of flowing air and thus the flow rate.

According to another embodiment the flow rate sensor 110 can be based on a rotary measurement principle, wherein, for example, the air flow drives a fan or ventilator so that the rotational speed of the ventilator indicates the flow rate.

According to another measurement principle, the flow rate sensor 110 can be based on a reciprocating measurement principle, wherein a back and forth moving flap or rocker is arranged in the air flow. The amplitude or frequency of the oscillations of the flap can thus be used to determine the flow rate of the air.

According to yet another measurement principle the flow rate sensor 110 can be based on a vortex measurement principle, wherein a pressure drop within the vortex can be used to determine the flow rate.

The flow rate sensor 110 can also be based on an ultrasonic measurement principle, wherein ultrasonic waves are used to determine a reflection on particles within the flow and a Doppler measurement (or subsequent delay measurements of reflected signals) may be used to derive the flow speed and thus the flow rate of air. Similarly, the Doppler measurement principle can be used in conjunction with a laser source to determine the flow rate, wherein the laser light is irradiated into the air flow and the reflecting signal (reflected from particles within the air flow) is used to determine the speed of the particles and thus of the flowing air.

However, the present invention shall not be limited to these particular flow rate sensing principles. Rather, any flow rate measurement principle which is suitable for the flow rate measurement in compressed air supply systems can be used and implemented in the flow rate sensor 110.

Yet other embodiments of the present invention define a commercial vehicle 30 comprising a compressed air system with air compressor 50, an air processing unit 120 and multiple air tanks 81-84, wherein the system includes an airflow rate sensing device (flow rate sensor 110) between the compressor 50 and the air processing unit 110. The sensing device 110 may be located within the discharge line 52. The sensing device 110 may also be integrated into the input port of the air processing unit 120. The signal of the air flow rate sensing device 110 may be fed back to the electronic control unit 130 of the air processing unit 120 by a line 135. The signal of the air flow rate sensing device 110 may also be fed back to any electronic control unit of the vehicle 30.

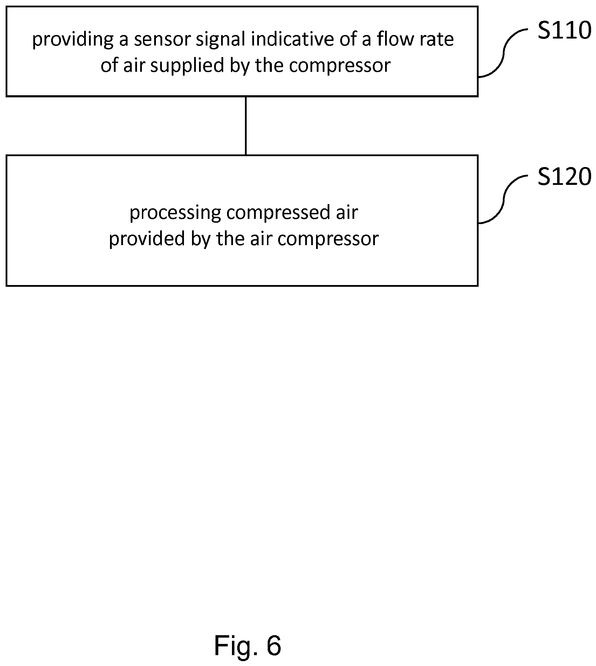

**Fig. 6** shows a flow chart of a method for supplying air for an air braking system in a commercial vehicle 30. The method comprises the steps of providing S110 a sensor signal indicating a flow rate of air supplied by the compressor 50, and processing S120 compressed air provided by the air compressor 50.

Functions of the systems as described previously may be implemented as further optional method steps. In addition, any defined function may be provided through the use of dedicated hardware, such as a control unit being hardware capable of executing software in association with appropriate software. Therefore, the method according to the present invention may at least in part be implemented in form of a computer program having a program code for performing the method, when the computer program is executed on a computer or processor.

The described embodiments of the present invention are particularly advantageous for systems, where the air processing unit 120 does not comprise any measurement of the flow rate or provide a measured feedback information on the real compressor flow rate that could be used for controlling or monitoring the air supply system.

The description and drawings merely illustrate the principles of the disclosure. It will thus be appreciated that those skilled in the art will be able to devise various arrangements that, although not explicitly described or shown herein, embody the principles of the disclosure and are included within its scope.

Furthermore, while each embodiment may stand on its own as a separate example, it is to be noted that in other embodiments the defined features can be combined differently, i.e. a particular feature descripted in one embodiment may also be realized in other embodiments. Such combinations are covered by the disclosure herein unless it is stated that a specific combination is not intended.

### LIST OF REFERENCE SIGNS

- 4: air dryer
- 9: pressure control
- 10: control line
- 10a: control input
- 11: exhaust valve
- 13: exhaust output
- 14: regeneration valve
- 19: processor
- 20: pressure voltage converter
- 21: temperature sensor
- 22: temperature voltage converter
- 23: rotational speed sensor
- 24: memory
- 25: counter
- 30: vehicle
- 51: intake line
- 2,50: compressor
- 3, 52: discharge line
- 8,80,81,..: storage for compressed air
- 110: flow rate sensor
- 120: air processing unit
- 18,130: control unit
- 135: pressure voltage converter
- 135: control line

## Claims

1. A system (100) for supplying air for a commercial vehicle (30) with an air compressor (50),
**characterized by:**
- a flow rate sensor (110) configured to provide a sensor signal indicative of a flow rate of air supplied by the compressor (50); and
- an air processing unit (120) configured to process compressed air provided by the air compressor (50)
wherein the flow rate sensor (110) is configured to sense the flow rate based on at least one of the following principles: a hot film measurement principle, a hot wire measurement principle, a floating body measurement principle, a Coriolis measurement principle, a rotary measurement principle, a reciprocating measurement principle, a vortex measurement principle, an ultrasonic measurement principle, a laser Doppler measurement principle.

2. The system (100) according to claim 1,
**characterized in that**
the flow rate sensor (110) is arranged upstream or downstream of the air compressor (50).

3. The air supply system (100) according to claim 1 or claim 2,
**characterized in that**
the flow rate sensor (110) is integrated in the air processing unit (120) to sense the flow rate fed into the air processing unit (120).

4. The air supply system (100) according to one of the preceding claims,
**characterized in that**
the air processing unit (120) includes an air drying unit configured to dry the compressed air supplied by the compressor (50).

5. A system (50) for compressing air for a commercial vehicle (30) with a compressed air braking system, comprising:
i an input port connectable to an intake line (51);
an output port connectable to a discharge line (52);
a compressor unit arranged between the input port and the output port,
**characterized by**
a flow rate sensor (110) integrated in the input port or in the output port and configured to provide a sensor signal indicative of a flow rate of air supplied by the compressor unit, wherein the flow rate sensor (110) is configured to sense the flow rate based on at least one of the following principles: a hot film measurement principle, a hot wire measurement principle, a floating body measurement principle, a Coriolis measurement principle, a rotary measurement principle, a reciprocating measurement principle, a vortex measurement principle, an ultrasonic measurement principle, a laser Doppler measurement principle.

6. The system (50) of claim 5,
**characterized by**
an air processing unit (120) configured to process compressed air provided by the compressor unit.

7. The system (100; 50) according to one of the preceding claims,
**characterized by**
an electronic control unit (130) configured to receive the sensor signal and to determine the flow rate of air.

8. The system (100; 50) according to claim 7,
**characterized in that**
the electronic control unit (130) is configured to control the air processing unit (120) and/or to monitor the compressor operation based on the determined flow rate.

9. The system (100; 50) according to claim 7 or claim 8,
**characterized in that**
the control unit (130) is the vehicle control unit or the air processing control unit.

10. The system (100; 50) according to one of the preceding claims,
**characterized in that**
the flow rate sensor (110) further comprises a measurement orifice (115).

11. The system (100; 50) according to claim 10,
**characterized in that**
the flow rate sensor (110) further comprises a pressure sensor (114) configured to provide a sensor signal indicative of a pressure change of air when passing the measurement orifice (115).

12. A vehicle (30), in particular a commercial vehicle, with an air compressor (50) and a system according to one of the claims 1 to 10.

13. A method for supplying air for a compressed air braking system in a commercial vehicle (30),
**characterized by**
- providing (S110) a sensor signal indicative of a flow rate of air supplied by the compressor (50); and
- based on the sensors signal, processing (S120) compressed air provided by the air compressor (50),
wherein the flow rate is sensed based on at least one of the following principles: a hot film measurement principle, a hot wire measurement principle, a floating body measurement principle, a Coriolis measurement principle, a rotary measurement principle, a reciprocating measurement principle, a vortex measurement principle, an ultrasonic measurement principle, a laser Doppler measurement principle.

## Patentansprüche

1. Ein System (100) für die Luftzufuhr eines Nutzfahrzeugs (30) mit einem Luftkompressor (50),
**ist gekennzeichnet durch:D**
- einen Durchflusssensor (110), der so konfiguriert ist, dass er ein Sensorsignal über den vom Kompressor (50) bereitgestellten Luftdurchsatz liefert; und
- eine Einheit zur Luftaufbereitung (120), die so konfiguriert ist, dass sie die durch den Luftkompressor (50) bereitgestellte Luft aufbereitet,
wobei der Durchflusssensor (110) so konfiguriert ist, dass er die Flussrate anhand mindestens einem der folgenden Messprinzipien erkennt: Heißfilm-Luftmassenmessung, Heißdraht-Luftmassenmessung, Schwebekörper-Durchflussmessung, Coriolis-Durchflussmessung, Rotationszählung, Drehkolbenzählung, Vortex-Messung, Ultraschall-Messung, Laser-Doppler-Messung.

2. Das System (100) gemäß Anspruch 1
**ist dadurch gekennzeichnet, dass**
der Durchflusssensor (110) dem Luftkompressor (50) vor- oder nachgelagert ist.

3. Die Luftzufuhr (100) gemäß Anspruch 1 oder Anspruch 2
**ist dadurch gekennzeichnet, dass**
der Durchflusssensor (110) in die Einheit zur Luftaufbereitung (120) integriert ist, um den der Einheit zur Luftaufbereitung (120) zugeführten Durchfluss zu messen.

4. Die Luftzufuhr (100) gemäß einem der vorgenannten Ansprüche
**ist dadurch gekennzeichnet, dass**
die Einheit zur Luftaufbereitung (120) einen Lufttrockner enthält, der so konfiguriert ist, dass er die dem Kompressor (50) zugeführte Druckluft trocknet.

5. Ein System (50) zur Verdichtung von Luft für ein Nutzfahrzeug (30) mit einer Druckluftbremsanlage, bestehend aus:
einem Einlass, der sich mit einer Zuluftleitung (51) verbinden lässt;
einem Auslass, der sich mit einer Abluftleitung (52) verbinden lässt;
einem Kompressor, der zwischen Einlass und Auslass angeordnet ist,
**ist gekennzeichnet durch**
einen Durchflusssensor (110), der in den Einlass oder Auslass integriert und so konfiguriert ist, dass er ein Sensorsignal über den vom Kompressor bereitgestellten Luftdurchsatz liefert, wobei der Durchflusssensor (110) so konfiguriert ist, dass er die Flussrate anhand mindestens einer der folgenden Messprinzipien erkennt: Heißfilm-Luftmassenmessung, Heißdraht-Luftmassenmessung, Schwebekörper-Durchflussmessung, Coriolis-Durchflussmessung, Rotationszählung, Drehkolbenzählung, Vortex-Messung, Ultraschall-Messung, Laser-Doppler-Messung.

6. Das System (50) aus Anspruch 5 ist
**gekennzeichnet durch**
eine Einheit zur Luftaufbereitung (120), die so konfiguriert ist, dass sie durch den Luftkompressor bereitgestellte Luft aufbereitet.

7. Das System (100; 50) gemäß einem der vorgenannten Ansprüche ist
**ist gekennzeichnet durch**
ein elektrisches Steuergerät (130), das so konfiguriert ist, dass es das Sensorsignal empfängt und den Luftdurchsatz ermittelt.

8. Das System (100; 50) gemäß Anspruch 7
**ist dadurch gekennzeichnet, dass**
das elektrische Steuergerät (130) so konfiguriert ist, dass es die Einheit zur Luftaufbereitung (120) steuert und/oder den Betrieb des Kompressors anhand der ermittelten Flussrate überwacht.

9. Das System (100; 100) gemäß Anspruch 7 oder Anspruch 8
**ist dadurch gekennzeichnet, dass**
das Steuergerät (130) das Steuergerät des Fahrzeugs oder das Steuergerät für die Luftaufbereitung darstellt.

10. Das System (100; 50) gemäß einem der vorgenannten Ansprüche
**ist dadurch gekennzeichnet, dass**
der Durchflusssensor (110) außerdem eine Messblende (115) besitzt.

11. Das System (100; 50) gemäß Anspruch 10
**ist dadurch gekennzeichnet, dass**
der Durchflusssensor (110) außerdem einen Drucksensor (114) besitzt, der so konfiguriert ist, dass er ein Sensorsignal bereitstellt, das auf eine Luftdruckänderung beim Durchlaufen der Messblende (115) hinweist.

12. Ein Fahrzeug (30), insbesondere ein Nutzfahrzeug, mit einem Luftkompressor (50) und einem System gemäß den Ansprüchen 1 bis 10.

13. Eine Methode für die Zufuhr von Luft an eine Druckluftbremsanlage in einem Nutzfahrzeug (30)
**ist gekennzeichnet durch**
- die Bereitstellung (S110) eines Sensorsignals über den vom Kompressor (50) bereitgestellten Luftdurchsatz; und
- die Aufbereitung (S120) der vom Kompressor (50) bereitgestellten Druckluft anhand des Sensorsignals,
wobei die Flussrate anhand mindestens einer der folgenden Messprinzipien erkannt wird: Heißfilm-Luftmassenmessung, Heißdraht-Luftmassenmessung, Schwebekörper-Durchflussmessung, Coriolis-Durchflussmessung, Rotationszählung, Drehkolbenzählung, Vortex-Messung, Ultraschall-Messung, Laser-Doppler-Messung.

## Revendications

1. Système (100) d'alimentation en air d'un véhicule (30) utilitaire ayant un compresseur (50) d'air,
**caractérisé par** :
- un capteur (110) de débit, configuré pour fournir un signal de capteur indicateur d'un débit d'air fourni par le compresseur (50); et
- une unité (120) de traitement de l'air, configurée pour traiter de l'air comprimé fourni par le compresseur (50) d'air, dans lequel le capteur (150) de débit est configuré pour détecter le débit sur la base d'au moins l'un des principes suivants : un principe de mesure à film chaud, un principe de mesure à fil chaud, un principe de mesure à corps flottant, un principe de mesure de Coriolis, un principe de mesure en rotation, un principe de mesure à mouvement alternatif, un principe de mesure à tourbillon, un principe de mesure à ultrasons, un principe de mesure Doppler à laser.

2. Système (100) suivant la revendication 1,
**caractérisé en ce que**
le capteur (100) de débit est monté en amont ou en aval du compresseur (50) d'air.

3. Système (100) suivant la revendication 1 ou la revendication 2,
**caractérisé en ce que**
le capteur (110) de débit est intégré à l'unité (120) de traitement de l'air pour détecter le débit envoyé dans l'unité (120) de traitement de l'air.

4. Système (100) suivant l'une des revendications précédentes,
**caractérisé en ce que**
l'unité (120) de traitement de l'air a une unité de séchage de l'air, configurée pour sécher l'air comprimé fourni par le compresseur (50).

5. Système (50) de compression de l'air d'un véhicule (30) utilitaire ayant un système de freinage à air comprimé, comprenant :
un orifice d'entrée pouvant être relié à une ligne (51) d'admission;
un orifice de sortie pouvant être relié à une ligne (52) d'évacuation;
un groupe compresseur monté entre l'orifice d'entrée et l'orifice de sortie;
**caractérisé par**
un capteur (110) de débit intégré à l'orifice d'entrée ou à l'orifice de sortie et configuré pour fournir un signal de capteur indicateur d'un débit d'air fourni par le groupe compresseur, dans lequel le capteur (110) de débit est configuré pour détecter le débit sur la base d'au moins l'un des principes suivants : un principe de mesure à film chaud, un principe de mesure à fil chaud, un principe de mesure à corps flottant, un principe de mesure de Coriolis, un principe de mesure en rotation, un principe de mesure à mouvement alternatif, un principe de mesure à tourbillon, un principe de mesure à ultrasons, un principe de mesure Doppler à laser.

6. Système (50) suivant la revendication 5,
**caractérisé par**
une unité (120) de traitement de l'air, configurée pour traiter de l'air comprimé fourni par le groupe compresseur.

7. Système (100; 50) suivant l'une des revendications précédentes,
**caractérisé par**
une unité (130) électronique de commande, configurée pour recevoir le signal du capteur et pour déterminer le débit d'air.

8. Système (100; 50) suivant la revendication 7,
**caractérisé en ce que**
l'unité (130) électronique de commande est configurée pour commander l'unité (120) de traitement de l'air et pour surveiller le fonctionnement du compresseur sur la base du débit qui est déterminé.

9. Système (100; 50) suivant la revendication 7 ou la revendication 8,
**caractérisé en ce que**
l'unité (130) de commande est l'unité de commande du véhicule ou l'unité de commande du traitement de l'air.

10. Système (100; 50) suivant l'une quelconque des revendications précédentes,
**caractérisé en ce que**
le capteur (110) de débit comprend en outre un orifice (115) de mesure.

11. Système (100; 50) suivant la revendication 10,
**caractérisé en ce que**
le capteur (110) de débit comprend en outre un capteur (114) de pression, configuré pour fournir un signal de capteur indicateur d'un changement de pression de l'air lorsqu'il passe dans l'orifice (115) de mesure.

12. Véhicule (30), en particulier véhicule utilitaire, ayant un compresseur (50) d'air et un système suivant l'une des revendications 1 à 10.

13. Procédé pour fournir de l'air à un système de freinage à air comprimé d'un véhicule (30) utilitaire,
**caractérisé par**
- on prévoit (S110) un signal de capteur indicateur d'un débit d'air fourni par le compresseur (50); et
- sur la base du signal de capteur, on traite (S120) de l'air comprimé fourni par le compresseur (50) d'air,
dans lequel on détecte le débit sur la base d'au moins l'un des principes suivants : un principe de mesure à film chaud, un principe de mesure à fil chaud, un principe de mesure à corps flottant, un principe de mesure de Coriolis, un principe de mesure en rotation, un principe de mesure à mouvement alternatif, un principe de mesure à tourbillon, un principe de mesure à ultrasons, un principe de mesure Doppler à laser.
